# EUROPEAN PATENT SPECIFICATION

(11) **EP 2 747 300 B1**
(45) Date of publication and mention of the grant of the patent: **12.06.2019**
(21) Application number: 13198043.5
(22) Date of filing: 18.12.2013
(51) Int. Cl.: H02J 50/10, H02J 50/90, H04B 5/00, H01F 38/14

(54) **WIRELESS CHARGER**
DRAHTLOSES LADEGERÄT
CHARGEUR SANS FIL

(30) Priority: 20.12.2012 US 201213721504
(43) Date of publication of application: 25.06.2014
(73) Proprietor: NXP B.V., 5656 AG Eindhoven (NL)
(72) Inventor: Van Lammeren, Johannes Petrus Maria, 5656 AG Eindhoven (NL); Sedzin, Aliaksei Vladimirovich, 5656 AG Eindhoven (NL); Brink, Klaas, 5656 AG Eindhoven (NL)
(74) Representative: Krott, Michel

(56) References cited:
- US-A1- 2006 202 665
- US-A1- 2008 116 847
- US-A1- 2010 039 234
- US-A1- 2011 241 435

## Description

### FIELD

This invention relates to an apparatus and method for wirelessly charging a variety of equipments or devices. The apparatus and method facilitate the free or random placement of the equipment or device to be charged upon the charger.

### BACKGROUND

Many equipments or devices, including, for example, mobile phones and electronic equipment, to name but a few, contain rechargeable batteries. An increasingly popular method of recharging such rechargeable batteries is wireless or inductive charging. An example of the use of wireless charging is provided in US 8,212,518. It is common to refer to the charging apparatus as the "transmitter" or "charging pad" or "pad" and to the device or equipment being charged as the "receiver". Both the receiver and the pad typically have respective coils between which the energy for charging the receiver's battery is transferred via inductive coupling.

In order to effectively charge the receiver, an adequate alignment between the coil of the receiver and the coil of the pad is necessary. Some pads employ fixed positioning in order to assure alignment between pad and receiver coils. Such alignment may be based upon the use of matching shapes or magnets in the pad and receiver.

Free-positioning pads allow the receiver to be positioned anywhere on the pad. Typically such a pad has an array of embedded charging coils. However, knowledge of the precise position of the receiver on the pad is required so that the appropriate coil(s) are energized in order to assure close inductive coupling between the pad and the receiver.

US 2008/0116847 A1 describes systems and methods for wireless power transfer. Primary windings generate magnetic fields which are inductively coupled to secondary windings to transfer power in a wireless manner. One embodiment includes a plurality of tiles of magnetic cores and windings for the primary windings. The tiles can be arranged in a magnetic segment with windings of tiles being orthogonal with respect to windings of adjacent tiles. For example, a winding of a first tile can be horizontal, and windings of adjacent tiles can be vertical. One embodiment further groups these magnetic segments into larger entities, wherein each magnetic segment can be independently activated. One embodiment includes a magnetic amplifier or an electronic device for secondary side control of power. This permits multiple devices to be powered or charged to be able to regulate power or charging independently from one another.

US 2006/0202665 A1 describes an inductive powering device that provides power to a portable device via inductive coupling between primary coils in the surface of the powering device and a secondary coil in the portable device. The portable device includes a passive locator device, such as an RFID device, to allow the primary coils of the inductive powering surface to detect the presence and location of the secondary coil, and only primary coils adjacent the secondary coil are energized for power transfer. A cost-effective driving configuration that arranges the primary coils into a matrix with drive circuits switchably connected to the row and columns is used to energize the primary coils.

US 2011/0241435 A1 describes a reliable power supply device which can withstand long-term use and which has a reduced power consumption. The power supply device includes a cell including an antenna and a switch and performing position detection operation and power feeding operation; a high-frequency wave supply circuit; a switch control circuit; and a potential detecting circuit. One electrode of the antenna is connected to the high-frequency wave supply circuit through the switch, and the other thereof is connected to the potential detecting circuit. By the position detection operation, whether there is a power receiving device which gets close to a cell or not is detected. Only when the power receiving device is detected, power is supplied by the power feeding operation.

### ▪SUMMARY

The present invention is set out in the appended set of claims. The embodiments and/or examples of the present disclosure which are not covered by the appended claims are considered as not being part of the present invention.

Illustrative embodiments of the invention include a method of charging a receiver which is capable of creating an NFC field, the method including: providing a pad having a plurality of charging coils arranged in an array and a plurality of NFC antennas arranged in an array; placing the receiver upon the pad; causing the receiver to create an NFC field; measuring the NFC field strength at two or more NFC antennas in the pad; comparing the NFC field strengths at two or more NFC antennas to determine at least one NFC antenna with greater field strength; selecting one or more charging coils associated with the NFC antenna receiving the greater field strength; and activating one or more charging coils to charge the receiver.

Furthermore other illustrative embodiments may include: associating each of the charging coils with a respective concentric NFC antenna; measuring the NFC field strength and comparing the NFC field strengths throughout the charging process and possibly further, selecting a different charging coil during the charging process. Furthermore, one may illustratively have the number of charging coils equal to the number of NFC antennas and possibly activating such associated charging coil when its respective NFC antenna receives the greater or greatest field strength. One or more controllers serve to direct power to the appropriate charging coil(s); receive and interpret signals from NFC coils, including comparison of NFC inputs, and controls the performance of the other described functions.

### BRIEF DESCRIPTION OF THE DRAWINGS

Fig. 1 is a partially exposed plan view of an illustrative embodiment of the invention;
Fig. 2 is a portion of a partially exposed plan view of an alternative embodiment of the invention;
Fig. 3 is a schematic view of an embodiment of the invention.

### DETAILED DESCRIPTION OF EXEMPLARY EMBODIMENTS

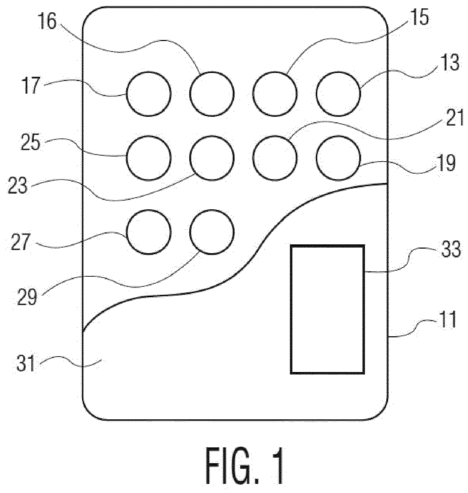

In Fig. 1, reference numeral 11 denotes a charging pad. Reference numerals 15, 16, 17, 19, 21, 23, 25, 27, and 29 denote Near Field Communication (NFC) coils. A greater or lesser number of NFC coils may be used. A receiver (not shown) is presumed to also have NFC functionality, i.e. to have an NFC antenna and be capable of sending an NFC signal via such antenna. NFC typically involves transmission centered at 13.56 MHz and provides for information transfer over comparatively short distances, typically 10 cm or so.

A variety of standards relate to NFC, including standards defined by the NFC Forum, and ISO/IEC, ECMA, ETSI/SCP (Smart Card Platform), GlobalPlatform and EMVCo, ECMA-340, ECMA-352, ISO/IEC 14443 (Type A and B), ISO 15693, ISO/IEC 18092 and ISO/IEC 21481, NFC Data Exchange Format (NDEF), Simple NDEF Exchange Protocol, and FeliCa.

Pad 11 also contains a plurality of spaced-apart charging coils suitable for charging the battery of the receiver.

In operation, the receiver is placed upon upper surface 31 of pad 11. The receiver transmits an NFC signal. The NFC signal is received by the NFC coils, 15, 16, 17, 19, 21, 23, 25, 27, and 29. But the signal strength at each of the NFC coils depends upon the relative distance of the coil from the NFC antenna in the receiver. Consequently, it is possible to measure the signal strength at each of the NFC coils and thereby determine at least the approximate location of the receiver on the pad. Illustratively, if the received signal strength is strongest at coil 23, one may presume that the receiver is proximate to NFC coil 23. Consequently whatever charging coil or coils are nearest NFC coil 23 can be turned on to charge the receiver.

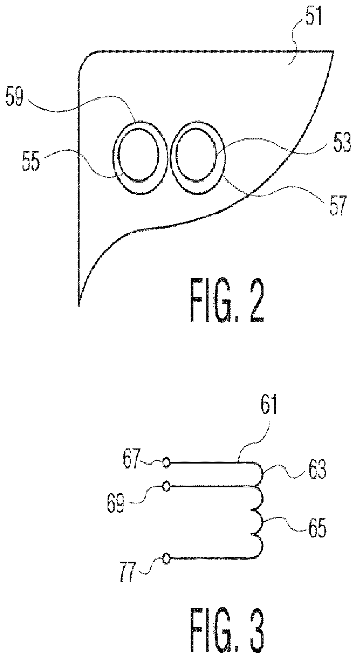

An alternative example which is not part of the claimed invention is disclosed in Fig. 2. Reference numeral 51 denotes a portion of a pad. Reference numerals 53 and 55 denote NFC coils. NFC coils 53 and 55 are placed within and more or less concentrically with respective charging coils 57 and 59. If for example, the received signal strength is greatest at NFC coil 53, then charging coil 57 may be turned on. Other charging coils in the vicinity of NFC coil 53, for example, charging coil 59 may also be turned on, depending on the charging procedure, etc.

In another embodiment, the charging coils and the NFC coils may be the same coil, according to the claimed invention a few windings of each charging coil are also used for NFC reception. Such embodiment is illustrated in Fig. 3. In Fig. 3, coil 61 has taps 67, 69, and 71. Illustratively, coil segment 63 may be used to receive an NFC signal at taps 67 and 69. During the charging operation, taps 67 and 71 maybe energized, thereby engaging the entire coil, namely segments 63 and 65.

Furthermore, the detection procedure described above is performed sporadically during charging to determine whether the receiver has moved. For example, if the receiver has been bumped or knocked aside, a re-performance of the detection procedure and subsequent choice of new charging coil(s) will help insure better charging efficiency and shorter charging time. The re-performance of the position detection can also be initiated if e.g. the receiver detects a sudden change of the received power.

Operation of pad 11 is achieved through one or more controllers 33 which direct power to appropriate charging coil(s); receive and interpret signals from NFC coils, including comparison of NFC inputs; and control the performance of the other described functions.

Various exemplary embodiments are described in reference to specific illustrative examples. The illustrative examples are selected to assist a person of ordinary skill in the art to form a clear understanding of, and to practice the various embodiments. However, the scope of systems, structures and devices that may be constructed to have one or more of the embodiments, and the scope of methods that may be implemented according to one or more of the embodiments, are in no way confined to the specific illustrative examples that have been presented. On the contrary, as will be readily recognized by persons of ordinary skill in the relevant arts based on this description, many other configurations, arrangements, and methods according to the various embodiments may be implemented.

To the extent positional designations such as top, bottom, upper, lower have been used in describing this invention, it will be appreciated that those designations are given with reference to the corresponding drawings, and that if the orientation of the device changes during manufacturing or operation, other positional relationships may apply instead. As described above, those positional relationships are described for clarity, not limitation.

The present invention has been described with respect to particular embodiments and with reference to certain drawings, but the invention is not limited thereto, but rather, is set forth only by the claims. The drawings described are only schematic and are nonlimiting. In the drawings, for illustrative purposes, the size of various elements may be exaggerated and not drawn to a particular scale. It is intended that this invention encompasses inconsequential variations in the relevant tolerances and properties of components and modes of operation thereof. Imperfect practice of the invention is intended to be covered.

Where the term "comprising" is used in the present description and claims, it does not exclude other elements or steps. Where an indefinite or definite article is used when referring to a singular noun, e.g. "a" "an" or "the", this includes a plural of that noun unless something otherwise is specifically stated. Hence, the term "comprising" should not be interpreted as being restricted to the items listed thereafter; it does not exclude other elements or steps, and so the scope of the expression "a device comprising items A and B" should not be limited to devices consisting only of components A and B. This expression signifies that, with respect to the present invention, the only relevant components of the device are A and B.

## Claims

1. A method for charging a receiver capable of creating an NFC (near-field communication) field, the method comprising:
- providing a pad (11) having a plurality of charging coils arranged in an array and a plurality of NFC antennas (13, 15, 16, 17, 19, 21, 23, 25, 27, 29) arranged in an array;
- placing said receiver upon said pad (11);
- causing said receiver to create an NFC field;
- measuring said NFC field strength at two or more of said plurality of NFC antennas (13, 15, 16, 17, 19, 21, 23, 25, 27, 29) in said pad (11);
- comparing said NFC field strengths at said two or more NFC antennas (13, 15, 16, 17, 19, 21, 23, 25, 27, 29) to determine at least one NFC antenna with greater field strength;
- selecting one or more of said plurality of charging coils associated with said at least one NFC antenna according to a predetermined rule;
- activating said one or more charging coils to charge said receiver;
wherein the steps of measuring said NFC field strength and comparing said NFC field strength are performed throughout the charging process to determine whether the receiver has moved, and wherein the method further includes selecting at least one different charging coil of said plurality of charging coils for charging said receiver and activating said at least one different charging coil during the charging process;
**characterised in that**,
each of said plurality of charging coils has first (67), second (69), and third (77) taps; said first and second taps form a coil segment (63) that permits the reception of an NFC signal, wherein said coil segment (63) effectively forms the NFC antenna associated with said charging coil; and said first (67) and third (77) taps are connected to the ends of said charging coil for providing charging energy.

2. The method of claim 1 in which the number of charging coils is equal to the number of NFC antennas (13, 15, 16, 17, 19, 21, 23, 25, 27, 29).

3. The method of claim 1 in which the number of charging coils is equal to the number of NFC antennas (13, 15, 16, 17, 19, 21, 23, 25, 27, 29) and said predetermined rule associates one charging coil with an unique NFC antenna and prescribes the activation of said associated one charging coil if said unique NFC antenna receives the greatest field strength.

4. A charging pad (11) comprising: a plurality of charging coils arranged in an array and a plurality of NFC (near-field communication) antennas (13, 15, 16, 17, 19, 21, 23, 25, 27, 29) arranged in an array; each of said plurality of charging coils being associated with a respective one of said plurality of NFC antennas, the charging pad is arranged to:
- measure an NFC field strength at two or more of said plurality of NFC antennas (13, 15, 16, 17, 19, 21, 23, 25, 27, 29) in said pad (11);
- compare said NFC field strengths at said two or more NFC antennas (13, 15, 16, 17, 19, 21, 23, 25, 27, 29) to determine at least one NFC antenna with greater field strength;
- select one or more of said plurality of charging coils associated with said at least one NFC antenna according to a predetermined rule;
- activate said one or more charging coils to charge a receiver;
wherein the charging pad (11) is further arranged to perform measuring said NFC field strength and comparing said NFC field strength throughout the charging process to determine whether the receiver has moved, and to select at least one different charging coil of said plurality of charging coils for charging said receiver and activate said at least one different charging coil during the charging process;
**characterised in that**,
each of said plurality of charging coils has first (67), second (69), and third (77) taps; said first and second taps form a coil segment (63) that permits the reception of an NFC signal, wherein said coil segment (63) effectively forms the NFC antenna associated with said charging coil; and said first (67) and third (77) taps are connected to the ends of said charging coil for providing charging energy.

5. The charging pad (11) of claim 4 further including a controller (33) for receiving said measurement of field strength and selecting one or more, but less than all, of said charging coils to perform charging.

## Patentansprüche

1. Ein Verfahren zum Laden eines Empfängers, der zum Erzeugen eines NFC (Near-Field-Communication) Feldes fähig ist, das Verfahren aufweisend:
- Bereitstellen eines Pads (11), das eine Mehrzahl von Ladespulen, die in einem Array angeordnet sind, und eine Mehrzahl von NFC-Antennen (13, 15, 16, 17, 19, 21, 23, 25, 27, 29), die in einem Array angeordnet sind, aufweist;
- Anbringen des besagten Empfängers auf dem besagten Pad (11);
- Bewirken, dass der besagte Receiver ein NFC Feld erzeugt;
- Messen der Feldstärke des besagten NFC Feldes bei zwei oder mehr NFC-Antennen der besagten Mehrzahl von NFC-Antennen (13, 15, 16, 17, 19, 21, 23, 25, 27, 29) in dem besagten Pad (11);
- Vergleichen der besagten NFC-Feldstärken bei den besagten zwei oder mehr NFC-Antennen (13, 15, 16, 17, 19, 21, 23, 25, 27, 29), um zumindest eine NFC-Antenne zu bestimmen, die eine größere Feldstärke hat;
- Auswählen einer oder mehrerer Ladespulen der besagten Mehrzahl von Ladespulen, die gemäß einer vorbestimmten Regel mit der besagten zumindest einen NFC-Antenne assoziiert ist;
- Aktivieren der besagten einen oder mehreren Ladespulen, um den besagten Empfänger zu laden;
wobei die Schritte des Messens der besagten NFC Feldstärke und des Vergleichens der besagten NFC Feldstärke durchgehend während des Ladevorgangs durchgeführt werden, um zu bestimmen, ob der Empfänger sich bewegt hat, und wobei das Verfahren ferner ein Auswählen von zumindest einer anderen Ladespule der besagten Mehrzahl von Ladespulen zum Laden des besagten Empfängers und ein Aktivieren der besagten zumindest einen anderen Ladespule während des Ladevorgangs aufweist;
**dadurch gekennzeichnet, dass**
jede Ladespule der besagten Mehrzahl von Ladespulen einen ersten (67), einen zweiten (69) und einen dritten (77) Abgriff aufweist, wobei der besagte erste Abgriff und der besagte zweite Abgriff einen Spulenabschnitt (63) bilden, der das Empfangen von NFC-Signalen erlaubt, wobei der besagte Spulenabschnitt (63) effektiv die mit der besagten Ladespule assoziierte NFC-Antenne bildet, und wobei der besagte erste (67) Abgriff und der besagte dritte (77) Abgriff mit den Enden der besagten Ladespule zur Bereitstellung von Ladeenergie verbunden sind.

2. Das Verfahren gemäß Anspruch 1, wobei die Anzahl der Ladespulen gleich der Anzahl von NFC-Antennen (13, 15, 16, 17, 19, 21, 23, 25, 27, 29) ist.

3. Das Verfahren gemäß Anspruch 1, wobei die Anzahl der Ladespulen gleich der Anzahl von NFC-Antennen (13, 15, 16, 17, 19, 21, 23, 25, 27, 29) ist und wobei der besagte vorbestimmte Regel eine Ladespule mit einer spezifischen NFC-Antenne eindeutig assoziiert und die Aktivierung der besagten assoziierten Ladespule vorschreibt, wenn die besagte spezifische NFC-Antenne die größte Feldstärke empfängt.

4. Ein Ladepad (11) aufweisend: eine Mehrzahl von Ladespulen, die in einem Array angeordnet sind, und eine Mehrzahl von NFC (Near-Field-Communication) Antennen (13, 15, 16, 17, 19, 21, 23, 25, 27, 29), die in einem Array angeordnet sind; wobei jede Ladespule der besagten Mehrzahl von Ladespulen mit einer jeweiligen NFC-Antenne der besagten Mehrzahl von NFC-Antennen assoziiert ist, wobei das Ladepad angeordnet ist zum:
- Messen einer NFC-Feldstärke bei zwei oder mehr NFC-Antennen der besagten Mehrzahl von NFC-Antennen (13, 15, 16, 17, 19, 21, 23, 25, 27, 29);
- Vergleichen der besagten NFC-Feldstärken bei den besagten zwei oder mehr NFC-Antennen (13, 15, 16, 17, 19, 21, 23, 25, 27, 29), um zumindest eine NFC-Antenne mit einer größeren Feldstärke zu bestimmen;
- Auswählen einer oder mehrerer Ladespulen der besagten Mehrzahl von Ladespulen, die gemäß einer vorbestimmten Regel mit der besagten zumindest einen NFC-Antenne assoziiert ist;
- Aktivieren der besagten einen oder mehreren Ladespulen, um einen Empfänger zu laden;
wobei das Ladepad (11) ferner angeordnet ist, das Messen der besagten NFC Feldstärke und das Vergleichen der besagten NFC Feldstärke durchgehend während des Ladevorgangs durchzuführen, um zu bestimmen, ob der Empfänger sich bewegt hat, und zumindest eine andere Ladespule der besagten Mehrzahl von Ladespulen zum Laden des besagten Empfängers auszuwählen und die besagte zumindest eine andere Ladespule während des Ladevorgangs zu aktivieren;
**dadurch gekennzeichnet, dass**
jede Ladespule der besagten Mehrzahl von Ladespulen einen ersten (67), einen zweiten (69) und einen dritten (77) Abgriff aufweist, wobei der besagte erste Abgriff und der besagte zweite Abgriff einen Spulenabschnitt (63) bilden, der das Empfangen von NFC-Signalen erlaubt, wobei der besagte Spulenabschnitt (63) effektiv die mit der besagten Ladespule assoziierte NFC-Antenne bildet, und wobei der besagte erste (67) Abgriff und der besagte dritte (77) Abgriff mit den Enden der besagten Ladespule zur Bereitstellung von Ladeenergie verbunden sind.

5. Das Ladepad gemäß Anspruch 4, ferner aufweisend eine Steuerung (33) zum Empfangen der besagten Messung der Feldstärke und zum Auswählen von einer oder mehreren aber nicht alle Ladespulen der besagten Ladespulen zur Durchführung des Ladens.

## Revendications

1. Procédé pour charger un récepteur capable de créer un champ NFC (communication en champ proche), le procédé comprenant les étapes suivantes :
- fournir un tapis de recharge sans fil (11) ayant une pluralité de bobines de charge disposées en réseau et une pluralité d'antennes NFC (13, 15, 16, 17, 19, 21, 23, 25, 27, 29) disposées en réseau ;
- placer ledit récepteur sur ledit tapis de recharge sans fil (11) ;
- provoquant la création d'un champ NFC par ledit récepteur ;
- mesurer ladite intensité du champ NFC au niveau de deux antennes, ou plus, de ladite pluralité d'antennes NFC (13, 15, 16, 17, 19, 21, 23, 25, 27, 29) dans ledit tapis de recharge sans fil (11) ;
- comparer lesdites intensités de champ NFC au niveau desdites deux, ou plus, antennes NFC (13, 15, 16, 17, 19, 21, 23, 25, 27, 29) pour déterminer au moins une antenne NFC avec une intensité de champ supérieure ;
- sélectionner une ou plusieurs bobines de ladite pluralité de bobines de charge associées à ladite au moins une antenne NFC selon une règle prédéterminée ;
- activer lesdites une ou plusieurs bobines de charge pour charger ledit récepteur ;
où les étapes de mesure de ladite intensité de champ NFC et de comparaison de ladite intensité de champ NFC sont exécutées tout au long du processus de charge pour déterminer si le récepteur a bougé, et où le procédé comprend en outre de sélectionner au moins une bobine de charge différente de ladite pluralité de bobines de charge pour charger ledit récepteur et activer ladite au moins une bobine de charge différente au cours du processus de charge ;
**caractérisé en ce que** chacune de ladite pluralité de bobines de charge comporte des première (67), deuxième (69) et troisième (77) prises ; lesdites première et deuxième prises forment un segment de bobine (63) qui permet la réception d'un signal NFC, où ledit segment de bobine (63) forme de manière effective l'antenne NFC associée à ladite bobine de charge ; et lesdites première (67) et troisième (77) prises sont connectées aux extrémités de ladite bobine de charge pour fournir l'énergie de charge.

2. Procédé selon la revendication 1, dans lequel le nombre de bobines de charge est égal au nombre d'antennes NFC (13, 15, 16, 17, 19, 21, 23, 25, 27, 29) .

3. Procédé selon la revendication 1 dans lequel le nombre de bobines de charge est égal au nombre d'antennes NFC (13, 15, 16, 17, 19, 21, 23, 25, 27, 29) et ladite règle prédéterminée associe une bobine de charge à une antenne NFC unique et prescrit l'activation de ladite bobine de charge associée si ladite antenne NFC unique reçoit le champ dont l'intensité est la plus élevée.

4. Tapis de recharge sans fil (11) comprenant : une pluralité de bobines de charge disposées en réseau et une pluralité d'antennes NFC (communication en champ proche) (13, 15, 16, 17, 19, 21, 23, 25, 27, 29) disposées en réseau ; chacune de ladite pluralité de bobines de charge étant associée à une antenne NFC respective de ladite pluralité d'antennes NFC, le tapis de recharge sans fil étant agencé pour :
- mesurer une intensité du champ NFC au niveau de deux antennes, ou plus, de ladite pluralité d'antennes NFC (13, 15, 16, 17, 19, 21, 23, 25, 27, 29) dans ledit tapis de recharge sans fil (11) ;
- comparer lesdites intensités de champ NFC au niveau desdites deux, ou plus, antennes NFC (13, 15, 16, 17, 19, 21, 23, 25, 27, 29) pour déterminer au moins une antenne NFC avec une intensité de champ supérieure ;
- sélectionner une ou plusieurs bobines de ladite pluralité de bobines de charge associées à ladite au moins une antenne NFC selon une règle prédéterminée ;
- activer lesdites une ou plusieurs bobines de charge pour charger un récepteur ;
où le tapis de recharge sans fil (11) est en outre agencé pour procéder à une mesure de ladite intensité de champ NFC et une comparaison de ladite intensité de champ NFC tout au long du processus de charge pour déterminer si le récepteur a bougé, et pour sélectionner au moins une bobine de charge différente de ladite pluralité de bobines de charge pour charger ledit récepteur et activer ladite au moins une bobine de charge différente au cours du processus de charge ; **caractérisé en ce que** chacune de ladite pluralité de bobines de charge comporte des première (67), deuxième (69) et troisième (77) prises ; lesdites première et deuxième prises forment un segment de bobine (63) qui permet la réception d'un signal NFC, où ledit segment de bobine (63) forme de manière effective l'antenne NFC associée à ladite bobine de charge ; et lesdites première (67) et troisième (77) prises sont connectées aux extrémités de ladite bobine de charge pour fournir l'énergie de charge.

5. Tapis de recharge sans fil selon la revendication 4 comprenant en outre un contrôleur (33) pour recevoir ladite mesure de l'intensité de champ et sélectionner une ou plusieurs, mais moins que la totalité, desdites bobines de charge pour procéder au chargement.
